# EUROPEAN PATENT SPECIFICATION

(11) **EP 1 547 473 B1**
(45) Date of publication and mention of the grant of the patent: **10.10.2007**
(21) Application number: 04077987.8
(22) Date of filing: 01.11.2004
(51) Int. Cl.: A23L 1/212, A23L 1/00, A23L 1/03, A23L 1/221

(54) **Composition comprising vegetables of the genus capsicum and process for preparing the same**
Zubereitung, enthaltend Gemüse aus der Gattung capsicum, und Verfahren für deren Herstellung
Composition comprenant des légumes du genre capsicum et procédé de préparation

(30) Priority: 16.12.2003 EP 03079090
(43) Date of publication of application: 29.06.2005
(73) Proprietor: UNILEVER N.V., 3013 AL Rotterdam (NL); UNILEVER PLC, London EC4P 4BQ (GB)
(72) Inventor: Müller, Rudi Günter, 74074 Heilbronn (DE); Steinert, Jacqueline Sabine, 74074 Heilbronn (DE)
(74) Representative: Wurfbain, Gilles L.

(56) References cited:
- US-A- 3 615 721
- US-A- 6 060 060
- ADE-OMOWAYE BIO, ANGERSBACH A, TAIWO KA, KNORR D: "The use of pulsed electric fields in producing juice from paprika (Capsicum annuum L.)" JOURNAL OF FOOD PROCESSING PRESERVATION, vol. 25, 2001, pages 353-365, XP009043233
- DATABASE WPI Derwent Publications Ltd., London, GB; AN 1990-353102 XP002276956 LEE HJ, SIN JI: "Red pepper paste prepn. - by scalding raw red pepper, cutting and mixing, addn. of enzyme, skin removal and concentration" & KR 8 905 256 A (NONG SIM CO) 20 décembre 1989 (1989-12-20)
- RAMESH MN, WOLF W, TEVINI D, BOGNAR A: "Microwave blanching of vegetables" JOURNAL OF FOOD SCIENCE, vol. 67, no. 1, 2002, pages 390-398, XP009043247
- DATABASE FSTA [Online] INTERNATIONAL FOOD INFORMATION SERVICE (IFIS), FRANFURT/MAIN, DE; SAIMBHI MS, GURDEEP K, NANDPURI KS: "Chemical constituents in mature green and red fruits of some varieties of chili (Capsicum annuum L.)" XP002276954 Database accession no. 77-2-11-j1629
- DATABASE BIOSIS [Online] BIOSCIENCES INFORMATION SERVICE, PHILADELPHIA, PA, US; PANKAR DS, MAGAR NG: "Capsaicin total coloring matter and ascorbic-acid contents in some selected varieties of chili capsicum-annuum" XP002276955 Database accession no. 197968073770
- DATABASE WPI Derwent Publications Ltd., London, GB; AN 1994-132898 XP002276957 GRUZNYKH BI, SIROTYUK AI, YANOVCHIK OE: "Vegetable caviar prepn.- from carrots, peppers, tomato puree, green spices, salt, sugar, ground black pepper, ground red pepper, sunflower oil, onion and parsnip" & SU 1 792 304 A (MOLD VEGETABLES GROWING RES. INST.; VEGETABLES SELECTN TECHN. RES. INS) 30 janvier 1993 (1993-01-30)
- RAMESH MN, WOLF W, TEVINI D, JUNG G: "Influence of processing parameters on the drying of spice paprika" JOURNAL OF FOOD ENGINEERING, vol. 49, 2001, pages 63-72,

## Description

### Field of the invention

The present invention relates to an edible composition comprising vegetables of the genus Capsicum, and in particular to compositions which should have a good taste and considerable vitamin C content, and the process for preparing the same.

### Background of the invention

There is a current trend among consumers for healthier, good tasting food, in particular in the developed world. Preferably, such food compositions should contain a considerable amount of vegetables and/or fruit and/or a high content of healthy components (vitamins, anti-oxidants, etcetera) from such fruit/vegetables.

It is known that vegetables of the genus Capsicum contain a considerable amount of healthy components (vitamins, antioxidants, etcetera). Examples of vegetables of the genus Capsicum are peppers, sweet pepper, bell pepper (e.g. red, yellow, green and black), Turkish elongated peppers, etcetera. For some applications, such vegetables may be too bulky for further processing into food, or for application into dry products.

The Derwent abstract of KR 8905256 discloses a process for the preparation of a red pepper paste, which process comprises:
- scalding raw red pepper in boiling water (85-100°C) for 4-8 minutes and cooling
- cutting and mixing
- adding cell-collapsing enzyme preparation composed of pectinase, cellulase and hemicellulase etcetera produced by Aspergillus niger and incubate
- remove the skin of the above-treated red pepper by pulp finisher
- heating to 90-100°C for 1-5 minutes
- concentrate by ordinary method.

US 3,615,721 discloses treating vegetable and fruit material with enzymes having cellulase, hemi-cellulase and pectinase activity, mechanically treating the material to form a slurry or paste, followed by shaping and drying the material.

Ade-Omowaye, B.I.O. et al. "The use of pulsed electric fields in producing juice from paprika (Capsicum annuum L.)", Journal of food processing preservation, vol 25, 2001, p353-365 describes the impact of pulsed electric field on yield and some quality parameters of juice from paprika compared to the results of juice obtained from enzymatically treated or untreated paprika mash.

Derwent abstract XP-002276956 of Korean patent application KR8 905 256 A in the name of Lee, H.J. and Sin , J.I. "Red pepper paste preparation by scalding raw pepper, cutting and mixing and addition of enzyme, skin removal and concentration", 20 december 1989, describes the preparation of red pepper paste, comprising the steps: (a) scalding raw red pepper in boiling water (85-100deg.C) for 4-8 minutes and cooling; (b) cutting cooled red pepper and mixing in a high-speed agitator; (c) adding cell-collapsing enzyme composed of pectinase, cellulose, and incubating the mixture containing enzyme at 40-55 deg.C for 6-120 minutes; (d) removing the skin of above treated red pepper by pulp finisher and heating at 90-100 deg.C for 1-5 minutes; (e) concentrating the mixture by the ordinary method.

Ramesh, M.N. et al., "Microwave blanching of vegetables", Journal of Food Science, Vol. 67, Nr 1, 2002, p390-398, describes a comparison between the effect of blanching in water and using pulsed microwave at 96 +/- 2°C on the vegetables spinach, carrot and bell peppers. Generally, it could be concluded that vegetables blanched with microwave energy were more nutritious than those heated to the same temperature by conventional water blanching.

Thus, there is a need for a process for obtaining edible compositions which comprise vegetables of the genus Capsicum in a concentrated form. Preferably, such composition should be rich in vitamins (in particular vitamin C) and/or antioxidants and have a good taste.

Regarding the latter, it was found that many existing concentrates of the vegetable of the genus Capsicum have a fermented and/or bitter off-taste.

Regarding the level of vitamins and/or antioxidants, it was found that the level of vitamin C in the concentrate of vegetables of the genus Capsicum can be a yardstick or indicator for the level of other goodies: if the amount of vitamin C in such products is considerable, the amount of other vitamins and/or antioxidants is also considerable. This is not an absolute and quantitative correlation, but it is an indicator, and as vitamin C levels are fairly easy to measure, but levels of other vitamins and/or antioxidants are not, the amount of vitamin C in a preparation comprising concentrated vegetables of the genus Capsicum is a practical indication on the total amount of vitamins and/or antioxidants maintained after processing the vegetable, when compared to fresh. This is important, as certain steps in processing and concentrating vegetables of the genus Capsicum may have a negative impact on vitamin and/or antioxidant levels.

### Summary of the invention

It has now been found that the above objectives can be met at least in part by a process for preparing a composition comprising vegetables from the genus of Capsicum, which process comprises the steps of:
(a) comminuting the vegetables,
(b) subjecting the comminuted vegetables to an enzyme treatment with a pectinase enzyme preparation,
(c) concentrating the enzyme-treated comminuted vegetables,
wherein the vegetables are subjected to a dry heat treatment at a temperature of at least 80°C prior to, during, or after said comminuting step, wherein said dry treatment is at a temperature of at least 120 °C, more preferably at least 150 °C.

In the above, it was found that the fermented off-taste found by prior art processes was reduced to a large extent when prior to the enzyme treatment the vegetables, comminuted or not, are subjected to a dry heat treatment of at least 80°C. Surprisingly, it was also found that such dry heat treatment can lead to an enhanced level of vitamin C in the resulting product. Such dry heat treatment can be achieved e.g. contact-, convection- or irradiation heating, or combinations thereof. Such can be achieved by means as known in the art of food processing, e.g. by roasting or grilling. Said dry heat treatment is at a temperature of at least 120°C, more preferably at least 150°C, and suitably at temperatures below 250°C, e.g. 150-250°C, or 200-250°C. Said dry heat treatment can be applied on the whole, uncomminuted vegetables, or on the comminuted vegetables, or during communition.

Enzymes are usually offered as "cocktails" of several activities rather than a single enzymatic activity. However, in many cases the different enzyme activities can still act on the same composition, as the composition can have a complex chemical structure having various types of chemical bounds, requiring different enzyme activities for break down. An example of this is enzyme cocktails as offered as "pectinase". Such pectinase composition often contains one or more of the following activities: polygalacturonase, pectin lysase, pectin methyl esterase. Pectinase preparations are often used in fruit juice processing. It is preferred in the present invention that the enzyme preparation used contains at least one of these three activities mentioned, preferably two, more preferably all three.

Although polygalacturonase is the common name, the systematic name is poly(1,4-α-D-galacturonide glycanohydrolase. The reaction it is active on is random hydrolysis of 1,4-α-D-galactosiduronic linkages in pectate and other galacturonans. Other names used for such enzyme activity are (pectin) endopolygalacturonase, pectin galacturonase, endopolygalacturonase, poly-α-1,4-galacturonide glycanohydrolase, endogalacturonase, or endo-D-galacturonase.

### Detailed description of the invention

In the above process, it is preferred that the enzyme treatment is effected for 10 minutes-24 hours, preferably for 30 minutes-2 hours. A suitable temperature for effecting the enzyme treatment of the comminuted vegetables is 20-75°C, preferably 40-60°C. After the enzyme treatment the enzyme is preferably inactivated, e.g. by subjecting to a temperature high enough, e.g. by heating to at least 75°C, preferably at least 80°C for at least 1 minute.

In the process according to the invention the enzyme treatment is preferably done on finely comminuted vegetable matter, preferably the comminution is such that the matter is in the form of a puree.

The concentration of the enzyme-treated matter is preferably carried out to such an extent to yield a product (e.g. concentrate or puree) of at least 15°Brix, preferably at least 20°Brix or even above 40°Brix (the latter more typical for puree). The concentration itself can be carried out by conventional means. Optionally, the concentration may involve drying of the product to yield a dry bell pepper matter. The drying can be carried out by techniques known in the art, usually involving a carrier material (e.g. 10-90% wt based on the final composition), e.g. maltodextrin.

In yet a further improvement of the process according to the invention the process further comprising a step for removing the peel of the vegetables, in particular of the vegetables of the genus Capsicum. This can be particularly well achieved if the vegetables are roasted. In case of a puree preparation the peel can be separated by a sieving equipment, for the juice processing a classical solid liquid separation can be conducted (decanter or filter press) to remove the peel.

It is preferred in the present invention that the vegetables subjected to the process as set out comprise at least 50% fresh weight, preferably at least 70% fresh weight, most preferably 100% fresh weight of vegetables of the genus Capsicum. In case of lower than 100% Capsicum, other vegetables that may be present (i.e. 50% wt or less, preferably 30% wt or less) are aubergines, courgettes, tomatoes, carrot, onion. These vegetables may be applied as fresh or frozen and are preferably pretreated by a dry heat treatment. Preferred vegetables of the genus Capsicum in the present process are bell pepper, and more in particular the red, orange or yellow versions.

The vitamin C level of fresh red bell pepper is approx. 140 mg/100 g fresh weight. The antioxidative activity is approx. 12 mmol/l (at 7°Brix). This level is amongst the highest found for vegetables. The antioxidative activity is measured by the so called TEAC (Trolox Equivalent Antioxidant Capacity). Commercial bell pepper preparations (canned) have a vitamin C content of about 0-5 mg/100 g fresh weight and the antioxidative activity was found to be approx. 3 mmol/l. A frozen commercial red bell pepper sample has a vitamin C content of approx. 34 mg/100 g fresh weight and a TEAC of approx. 6 mmol/l. A bell pepper which is blanched, and then treated with an enzyme as in the present invention has a vitamin C content of about 90 mg/100 g fresh weight. It was found that with the process according to the invention the bell pepper which is roasted/grilled at about 200°C (i.e. subjected to dry heat), and enzyme treatment according to the invention has about 130 mg/100 g fresh weight vitamin C.

In such calculations, the amount of vitamin C is calculated on the basis of the fresh weight of the bell pepper that was used, and thus is largely independent of the concentration step. If the bell pepper composition prepared as above (grilled, 200°C) is dried (e.g. under vacuum) with a (carbohydrate) carrier (percentage of the carrier in dried product is 35 % wt) the vitamin C content is about 350 mg/100 g product.

Thus, the invention also relates to a pasteurised or sterilised composition not being dry of processed vegetables of the genus Capsicum, the composition having a vitamin C content of 100-500 (preferably 100-400) mg per 100 g as calculated on the fresh bell pepper. Preferably such composition is storage stable. Preferably it has a TEAC of at least 8 mmol/l, more preferably at least 9 mmol/l.

The invention further relates to a composition (in the form of powder or particulates) of dry vegetables of the genus Capsicum having a vitamin C content of 100-1000 mg (preferably 200-700) / 100 g dry powder weight.

In the above, the vegetables of the genus Capsicum are preferably bell pepper, and preferably the red, orange or yellow colored ones.

### EXAMPLES

### Example 1a (concentrate and dried product, fresh bell pepper)

Fresh red bell pepper was cleaned and halved and subjected to convection heating for 20 minutes, 220°C. Thereafter, the skin was peeled, and the resulting peeled halves were pureed in a cutter. The bell pepper puree was subjected to enzymatic maceration with 1 mg/kg Fructozyme (Erbsloeh) enzyme preparation (pectinase, arabinase, cellulase and hemicellulase activity) for 2 hours and 47 °C. The macerated preparation was pressed to a juice and the enzyme activity was inactivated by briefly heating to 80°C for 2 minutes. This concentrate contained about 125 mg vitamin C per 100 g fresh weight. The juice yield prior to concentration was about 85%, with excellent taste.

The juice was concentrated by evaporation to about 66°Brix. A vitamin C content of about 570 mg/100 g product could be measured in this preparation.

The concentrate was dried under vacuum with maltodextrin as carrier (carrier content in final product: 35% wt). The vitamin C content of the dry powder was 350 mg/100 g.

### Example 1b (concentrate, fresh bell pepper)

The procedure as above, except for the concentration and drying steps, was repeated with bell peppers subjected to different heating steps, and the juice yield, taste and vitamin C content was determined. The results are set out in the table below. Fresh bell pepper contained about 137 mg /100 g fresh weight vitamin C.

| Heating procedure | Juice yield (%) | Sensory | Vitamin C mg/100 g fresh weight |
|---|---|---|---|
| b: Grill (20 min./220°C) | 85 | Slightly roasted taste, no cooked or fermented off-taste | 125 |

### Example 2 (puree and dried product, frozen grilled bell pepper)

The puree was made of commercially available defrosted, pretreated grilled red bell pepper pieces which were cut and homogenised with a blender. Then enzymes 1 mg/kg Rohament PL (Ab Enzymes) and 1 mg/kg Fructozyme Citrus cloudy (Erbsloeh) were added both into the sludge using a water quench. The reaction time was 2 hours. Before inactivation of enzymes (80°C, 2 min) the sample was pureed through a sieve (mash 0.5 mm). The vitamin C content of the puree was 107 mg/100 g fresh weight and the antioxidative activity is approx. 12 mmol/l. The taste of the puree was good.

The puree as obtained above was concentrated under vacuum to 30°Brix (vitamin C content about 250 mg mg/100 g product). The taste of this concentrated puree was also good.

The puree concentrate was dried by vacuum drying on maltodextrin as carrier (maltodextrin content in endproduct: about 35% wt). The vitamin C content of the dry powder was about 175 mg/100 g dried product.

## Claims

1. Process for preparing a composition comprising vegetables from the genus of Capsicum, which process comprises the steps of
(a) comminuting the vegetables,
(b) subjecting the comminuted vegetables to an enzyme treatment with a pectinase enzyme preparation,
(c) concentrating the enzyme-treated comminuted vegetables,
wherein the vegetables are subjected to a dry heat treatment during, or after said comminuting step, wherein said dry heat treatment is at a temperature of at least 120°C, more preferably at least 150°C.

2. Process according to claim 1, wherein the dry heat treatment is achieved by contact-, convection- or irradiation heating or combinations thereof.

3. Process according to claims 1 or 2, wherein the dry heat treatment comprises roasting and/or grilling.

4. Process according to claim 1-3, wherein the pectinase enzyme preparation comprises one or more of the following activities: polygalacturonase, pectin lysase, pectin methyl esterase.

5. Process according to claim 1-4, wherein the enzyme treatment is effected for 10 minutes-24 hours.

6. Process according to claim 1-5, wherein the temperature of the comminuted vegetables when subjected to the enzyme treatment is 20-75°C.

7. Process according to claim 1-6, further comprising an inactivation of the enzyme by heating to at least 75°C, preferably at least 80°C for at least 1 minute.

8. Process according to claim 1-7, wherein the comminution in step (a) is such that it leads to a puree.

9. Process according to claim 1-8, wherein the concentration is carried out to yield a product of at least 15°Brix, preferably at least 20°Brix.

10. Process according to claim 1-8, wherein the concentration involves drying of the product.

11. Process according to claim 1-10, wherein the vegetables of the genus Capsicum are fresh vegetables.

12. Process according to claim 1-11, further comprising a step for removing the peel of the vegetables.

13. Process according to claim 1-12, wherein the vegetables of the genus Capsicum comprises bell pepper.

14. Composition of processed vegetables of the genus Capsicum having a vitamin C content of 100-500 (preferably 100-400) mg per 100 g as calculated on the weight of fresh vegetables of the genus Capsicum, wherein said composition is pasteurised or sterilised.

15. Powder or particulates of dry vegetables of the genus Capsicum having a vitamin C content of 100-1000 mg (preferably 200-700) /100 g dry powder weight.

16. Composition as claims 14-15, wherein the vegetables of the genus Capsicum is bell pepper.

## Patentansprüche

1. Verfahren zum Herstellen einer Zusammensetzung umfassend Gemüse der Gattung Capsicum, welches Verfahren die Schritte umfast:
(a) Zerkleinern der Gemüse,
(b) Unterwerfen der zerkleinerten Gemüse unter eine En-zymbehandlung mit einem Pektinase-Enzympräparat,
(c) Konzentrieren der mit Enzym behandelten zerkleinerten Gemüse,
wobei die Gemüse während oder nach besagtem Zerkleinerungsschritt einer Trocken-Wärmebehandlung unterworfen werden, wobei besagte Trocken-Wärmebehandlung eine Temperatur von mindestens 120°C, bevorzugter mindestens 150°C hat.

2. Verfahren gemäß Anspruch 1, worin die Trocken-Wärmebehandlung durch Kontakt-, Konvektions-.oder Bestrahlungswärme oder Kombinationen davon erreicht wird.

3. Verfahren gemäß Ansprüchen 1 oder 2, worin die Trocken-Wärmebehandlung Rösten und/oder Grillen umfasst.

4. Verfahren gemäß Anspruch 1-3, worin das Pektinase-Enzympräparat eine oder mehrere der folgenden Wirksamkeiten umfasst: Polygalacturonase, Pektinlysase, Pektinmethylesterase.

5. Verfahren gemäß Anspruch 1-4, worin die Enzymbehandlung für 10 Minuten - 24 Stunden bewirkt wird.

6. Verfahren gemäß Anspruch 1-5, worin die Temperatur der zerkleinerten Gemüse, wenn sie der Enzymbehandlung unterworfen werden, 20-75°C ist.

7. Verfahren gemäß Anspruch 1-6, welches ferner eine Inaktivierung des Enzyms durch Erwärmen auf mindestens 75°C, vorzugsweise mindestens 80°C für mindestens 1 Minute umfasst.

8. Verfahren gemäß Anspruch 1-7, worin die Zerkleinerung in Schritt (a) so ist, dass sie zu einem Püree führt.

9. Verfahren gemäß Anspruch 1-8, worin die Konzentration durchgeführt wird, um ein Produkt von mindestens 15°Brix, vorzugsweise mindestens 20°Brix zu ergeben.

10. Verfahren gemäß Anspruch 1-8, worin die Konzentration Trocknen des Produkts einbezieht.

11. Verfahren gemäß Anspruch 1-10, worin die Gemüse der Gattung Capsicum frische Gemüse sind.

12. Verfahren gemäß Anspruch 1-11, welches ferner einen Schritt zum Entfernen der Schale von den Gemüsen umfasst.

13. Verfahren gemäß Anspruch 1-12, worin das Gemüse der Gattung Capsicum Glockenpaprika umfasst.

14. Zusammensetzung von verarbeitenen Gemüsen der Gattung Capsicum mit einem Vitamin C Gehalt von 100-500 (vorzugsweise 100-400) mg pro 100 g wie am Gewicht von frischem Gemüse der Gattung Capsicum berechnet, wobei besagte Zusammensetzung pasteurisiert oder sterilisiert ist.

15. Pulver oder Teilchen von trockenem Gemüse der Gattung Capsicum mit einem Vitamin C Gehalt von 100-1000 mg (vorzugsweise 200-700)/100 g Trockenpulvergewicht.

16. Zusammensetzung wie Ansprüche 14-15, worin das Gemüse der Gattung Capsicum Glockenpaprika ist.

## Revendications

1. Procédé de préparation d'une composition comprenant des légumes du genre Capsicum, ledit procédé comprenant les étapes consistant à :
(a) hacher les légumes ;
(b) soumettre les légumes hachés à un traitement enzymatique avec une préparation enzymatique de pectinase ;
(c) concentrer les légumes hachés traités avec l'enzyme,
dans lequel les légumes sont soumis à un traitement thermique sec pendant, ou après ladite étape de hachage, où ledit traitement thermique sec est effectué à une température d'au moins 120°C, mieux d'au moins 150°C.

2. Procédé selon la revendication 1, dans lequel le traitement thermique sec est effectué par chauffage par contact, par convection ou par irradiation, ou une combinaison de ceux-ci.

3. Procédé selon les revendications 1 ou 2, dans lequel le traitement thermique sec comprend le fait de rôtir et/ou de griller.

4. Procédé selon les revendications 1 - 3, dans lequel la préparation enzymatique de pectinase comprend une ou plusieurs des activités suivantes : polygalacturonase, pectine lyase, pectine méthylestérase.

5. procédé selon les revendications 1 - 4, dans lequel le traitement enzymatique est effectué pendant une durée de 10 minutes - 24 heures.

6. Procédé selon les revendications 1 - 5, dans lequel la température des légumes hachés lorsqu'ils sont soumis au traitement enzymatique est de 20 - 75°C.

7. Procédé selon les revendications 1 - 6, comprenant en outre une inactivation de l'enzyme par chauffage à au moins 75°C, mieux à au moins 80°C pendant au moins une minute.

8. Procédé selon les revendications 1 - 7, dans lequel le hachage dans le cadre de l'étape (a) est tel qu'il entraîne la formation d'une purée.

9. Procédé selon les revendications 1 - 8, dans lequel la concentration est réalisée pour donner un produit d'au moins 15° Brix, mieux d'au moins 20° Brix.

10. Procédé selon les revendications 1 - 8, dans lequel la concentration implique le séchage du produit.

11. Procédé selon les revendications 1 - 10, dans lequel les légumes du genre Capsicum sont des légumes frais.

12. Procédé selon les revendications 1 - 11, comprenant en outre une étape pour éliminer la peau des légumes.

13. Procédé selon les revendications 1 - 12, dans lequel les légumes du genre Capsicum comprennent des poivrons.

14. Composition de légumes transformés du genre Capsicum ayant une teneur en vitamine C de 100 - 500 (mieux de 100 - 400) mg pour 100 g sur la base du poids des légumes du genre Capsicum frais, dans laquelle ladite composition est pasteurisée ou stérilisée.

15. Poudre ou particules de légumes secs du genre Capsicum ayant une teneur en vitamine C de 100 - 1000 mg (de préférence de 200 - 700) / 100 g de poids de poudre sèche.

16. Composition selon les revendications 14 - 15, dans laquelle les légumes du genre Capsicum sont des poivrons.
